# EUROPEAN PATENT SPECIFICATION

(11) **EP 3 715 235 B1**
(45) Date of publication and mention of the grant of the patent: **15.09.2021**
(21) Application number: 20166338.2
(22) Date of filing: 27.03.2020
(51) Int. Cl.: B62J 43/10, B60L 50/60, B62J 43/28, B62K 19/30

(54) **ARRANGEMENT FOR A BATTERY AND ECU OF A SADDLE-TYPE VEHICLE**
ANORDNUNG FÜR EINE BATTERIE UND EIN STEUERGERÄT EINES SATTELFAHRZEUGS
AGENCEMENT POUR UNE BATTERIE ET UNE UNITÉ DE COMMANDE D'UN VÉHICULE DE TYPE À ENFOURCHER

(30) Priority: 29.03.2019 JP 2019067636
(43) Date of publication of application: 30.09.2020
(73) Proprietor: HONDA MOTOR CO., LTD., Minato-ku Tokyo 107-8556 (JP)
(72) Inventor: SHIMIZU, Koichiro, Wako-shi, Saitama 351-0193 (JP)
(74) Representative: Feller, Frank

(56) References cited:
- EP-A2- 1 834 829
- DE-A1-102008 024 007
- JP-A- H04 358 983
- JP-A- H05 139 365
- JP-A- 2010 228 628
- US-A1- 2013 270 023

## Description

### BACKGROUND OF THE INVENTION

### Field of the Invention:

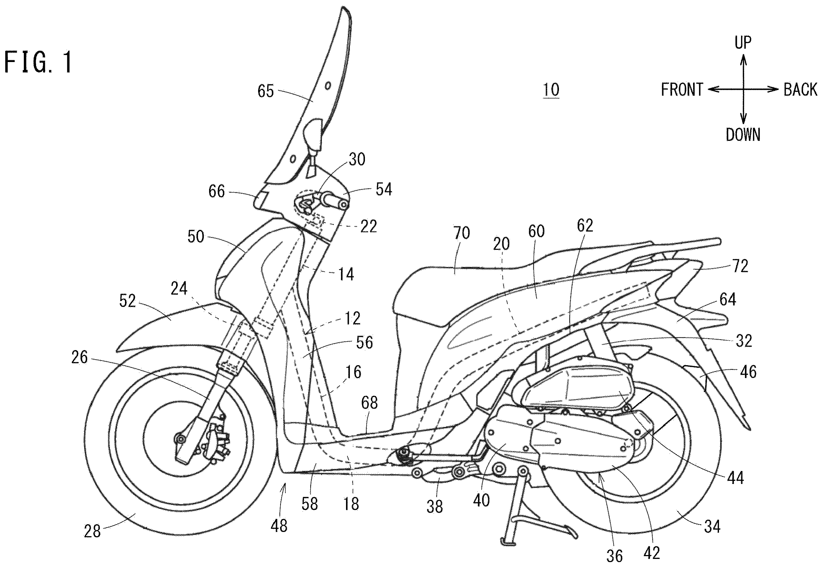

The present invention relates to a saddle-type vehicle with a motive power battery and an ECU placed in a body cover. Description of the Related Art:
Japanese Patent No. 5021191 discloses a two-wheeled auto vehicle with electrical components such as an ECU disposed in a body cover placed above a rear wheel.
German patent publication no. DE 10 2008 024 007 A1 provides a two-wheeled vehicle comprising a battery placed in a body cover over the rear wheel.
Patent document JP H04 358983 A discloses a saddle-type vehicle comprising a body cover above the rear wheel creating a space where a battery is placed as well as an ECU partially below said battery.
United States patent publication no. US 2013/0270023 A1 discloses a straddle-type electric vehicle, having a drive motor and an electronic control unit (ECU) for controlling power supplied from the batteries to the drive motor.
Japanese patent publication JP H 05-139365 A provides a scooter-type two-wheeled vehicle having four batteries (13, 15, 16 & 18 in Fig. 1) acting as a power source or energy reserve for electrical equipment of the vehicle.
European patent publication no. EP 1 834 829 A2 discloses a two-wheeled vehicle having a power supply device positioned at a rear portion of the vehicle, above the rear wheel.
A yet another Japanese patent publication JP 2010-228628A provides a two-wheeled vehicle having batteries 30, 31 (see Fig. 2) for providing electric power.

### SUMMARY OF THE INVENTION

A saddle-type vehicle equipped with an electric motor known as HEV has a relatively large motive power battery for powering the electric motor. It is desired to have a structure for efficiently housing such a large motive power battery in the body cover described in Japanese Patent No. 5021191.

The present invention has been made in order to attain it and seeks to provide a saddle-type vehicle that allows a motive power battery to be efficiently housed in a body cover.

The present invention provides a saddle-type vehicle according to independent claim 1. Specifically, the saddle-type vehicle includes a rear wheel, a body cover placed above the rear wheel, and an ECU placed in the body cover. The saddle-type vehicle has the following features.

A first feature; a bottom surface of the body cover is formed with an upwardly projecting bend, a motive power battery shaped in a substantially rectangular parallelepiped is disposed in the body cover, and the ECU is positioned lower than a bottom surface of the motive power battery.

A second feature; a back end of the motive power battery is positioned forward of a back end of the ECU.

A third feature; the motive power battery is placed in a forward tilted position being offset frontward relative to a peak of the bottom surface of the body cover, and the ECU is placed in a backward tilted position being offset backward relative to the peak of the bottom surface of the body cover.

A fourth feature; a rear light overlaps the ECU in top view and is placed above the ECU.

A fifth feature; a connector of a rear-light wire is placed between the motive power battery and the bottom surface of the body cover, at a position forward of a proximate point between the motive power battery and the bottom surface of the body cover.

The present invention allows the motive power battery to be efficiently housed in the body cover.

The above and other objects features and advantages of the present invention will become more apparent from the following description when taken in conjunction with the accompanying drawings in which a preferred embodiment of the present invention is shown by way of illustrative example.

### BRIEF DESCRIPTION OF THE DRAWINGS

FIG. 1 is a left side view of a saddle-type vehicle;
FIG. 2 is a cross-sectional view of an upper portion of a rear wheel of the saddle-type vehicle;
FIG. 3 is a top view of a rear portion of the saddle-type vehicle;
FIG. 4 is a top view of a rear portion of the saddle-type vehicle; and
FIG. 5 is a top view of a rear portion of the saddle-type vehicle.

### DESCRIPTION OF THE PREFERRED EMBODIMENTS

### [First embodiment]

### [Structure of saddle-type vehicle]

FIG. 1 is a left side view of a saddle-type vehicle 10. Hereinafter, front-back, right-left, and up-down directions are referred to based on the directions indicated in the drawings.

The saddle-type vehicle 10 is a scooter-type, two-wheeled auto vehicle. The saddle-type vehicle 10 may also be a three- or four-wheeled vehicle or the like instead of a two-wheeled vehicle. The saddle-type vehicle 10 may also be a vehicle other than scooter type.

The saddle-type vehicle 10 has a body frame 12. The body frame 12 includes a head pipe 14, a down frame 16, a lower frame 18, and a rear frame 20.

The head pipe 14 extends frontward-downwardly and supports a steering stem 22 in a rotatable manner. The steering stem 22 is connected with a front fork 26 via a bottom bridge 24. The front fork 26 extends frontward-downwardly and pivotally supports a front wheel 28 at a tip of the front fork 26. A steering handle 30 is mounted at an upper end of the steering stem 22.

The down frame 16 extends backward-downwardly from the head pipe 14. The lower frame 18 extends from a lower portion of each down frame 16 to rightward and leftward and further extends backward. The rear frame 20 extends from the back end of each of the right and left down frames 16 backward-upwardly.

A rear suspension 32 is mounted on the rear frame 20. The rear suspension 32 extends backward-downwardly and pivotally supports a rear wheel 34 at a tip of the rear suspension 32.

The saddle-type vehicle 10 has a power unit 36 for generating driving power. The power unit 36 is provided at a back end of one lower frame 18 via a link mechanism 38 so as to be movable in the up-down direction. The power unit 36 includes an engine 40, a transmission 42, and an air cleaner 44. The transmission 42 is provided integrally with the engine 40 behind the engine 40. The air cleaner 44 is disposed above the transmission 42. On the right side of the saddle-type vehicle 10, a muffler 46 for discharging the exhaust of the engine 40 is mounted.

The saddle-type vehicle 10 has a motor generator (not shown) separate from the engine 40, as a driving source. The motor generator is arranged so as to drive and rotate a crank shaft (not shown) of the engine 40. With the motor generator, the driving force output by the engine 40 is assisted with the driving force output by the motor generator, especially at the start and the acceleration of the vehicle. The motor generator also functions as a power generator while the vehicle 10 is running only with the driving force of the engine 40.

The body frame 12 is covered by a body cover 48 made of synthetic resin. The body cover 48 has a front cover 50, a front fender 52, a handle cover 54, a leg shield 56, a lower cover 58, a side cover 60, a rear under cover 62, and a rear fender 64.

The front cover 50 is disposed so as to cover the head pipe 14. The front fender 52 is disposed so as to cover the upper and back sides of the front wheel 28. The handle cover 54 is disposed so as to cover a central portion of the steering handle 30 and the steering stem 22. The handle cover 54 is provided with a wind shield 65 and a head light 66. The leg shield 56 is disposed so as to cover the down frame 16 and also cover a driver's legs from the front.

The lower cover 58 is disposed so as to cover the lower frame 18 provided on both the right and the left sides. The lower cover 58 has a floor step 68. The side cover 60 is disposed so as to cover the rear frame 20 provided on each of the right and the left sides. A seat 70 is mounted at a top of the side cover 60. A rear light 72 is mounted at the back of the side cover 60. The rear light 72 may be any of a tail light, a stop light, or a winker light. The rear under cover 62 is disposed so as to cover a portion of a lower opening of the side cover 60. The rear fender 64 is disposed so as to cover the upper and back sides of the rear wheel 34.

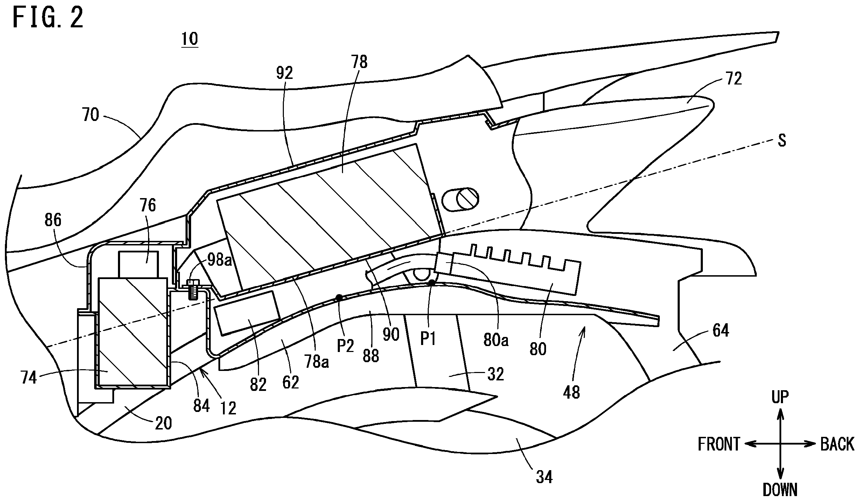

FIG. 2 is a cross-sectional view of an upper portion of the rear wheel 34 of the saddle-type vehicle 10. The cross section in FIG. 2 is the cutting by a plane that passes through the center of the vehicle width direction of the saddle-type vehicle 10.

A service battery 74, a fuse 76, a motive power battery 78, an ECU 80, and a connector 82 are housed in a space formed between the rear under cover 62 and the seat 70.

The service battery 74 and the fuse 76 are housed in a battery housing portion 84 formed at a front end of the rear under cover 62. An upper opening of the battery housing portion 84 is closed by a lid 86.

At the back of the battery housing portion 84, the rear under cover 62 has a bent portion 88 formed with an upwardly projecting bend. The motive power battery 78, the ECU 80, and the connector 82 are placed above the bent portion 88.

The motive power battery 78 is shaped in a substantially rectangular parallelepiped and housed in a battery casing 90. An upper opening of the battery casing 90 is closed by a housing casing 92. The motive power battery 78 is placed in a forward tilted posture at a location which is offset frontward relative to a peak P1 (the highest point in the up-down direction) of the bent portion 88. The motive power battery 78 being placed at a location which is offset frontward relative to the peak P1 refers to a state in which the center of gravity of the motive power battery 78 lies at least forward of the peak P1. The motive power battery 78 being placed in a forward tilted position refers to a state in which the up-down direction position of the front end of the motive power battery 78 is at a location lower than the up-down direction position of the back end of the motive power battery 78. The motive power battery 78 is placed such that the back end of the motive power battery 78 lies forward of the back end of the ECU 80.

The ECU 80 is placed below a plane S which passes through a bottom surface 78a of the motive power battery 78. The ECU 80 is placed in a backward tilted position at a location which is offset backward relative to the peak P1 of the bent portion 88. The ECU 80 being placed at a location which is offset backward relative to the peak P1 refers to a state in which the center of gravity of the ECU 80 lies at least backward of the peak P1. The ECU 80 being placed in a backward tilted position refers to a state in which the up-down direction position of the back end of the ECU 80 is at a location lower than the up-down direction position of the front end of the ECU 80. The ECU 80 is placed such that a connector 80a of the ECU 80 overlaps the motive power battery 78 in the front-back direction.

The connector 82 is mounted at a tip of a rear-light wire 104, described later. The connector 82 is positioned forward of a proximate (closest) point P2 on the bent portion 88, which is closest to the motive power battery 78 in the up-down direction.

The rear light 72 is placed above the ECU 80. The rear light 72 is placed so as to overlap the ECU 80 in the front-back direction.

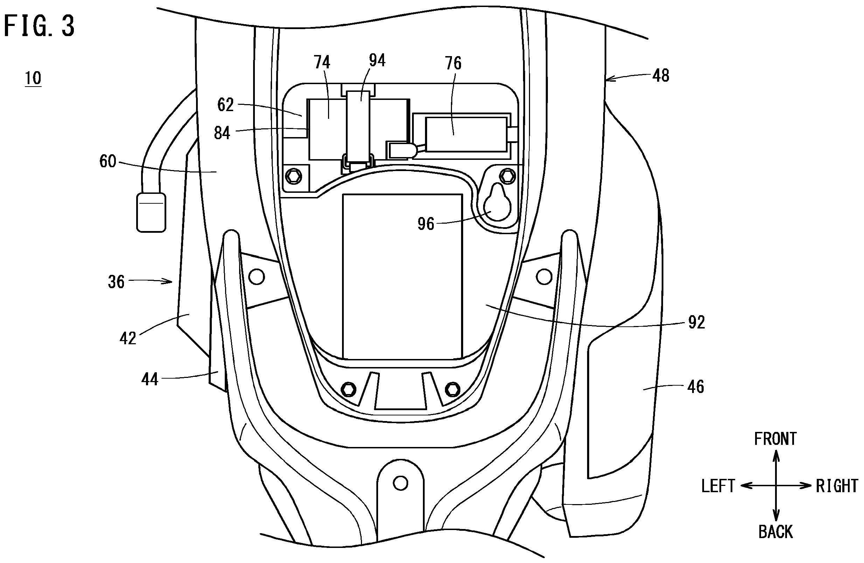

FIG. 3 is a top view of a rear portion of the saddle-type vehicle 10. The top view shown in FIG. 3 illustrates the saddle-type vehicle 10 as seen from above with the seat 70 and the lid 86 removed.

The service battery 74 is placed leftward with respect to the center of the vehicle width direction of the saddle-type vehicle 10 and fixed to the rear under cover 62 by a metallic band 94. The fuse 76 is placed on the right side of the service battery 74. At the back of the fuse 76, there is an inlet 96 for pouring cooling water into a reservoir tank which stores the cooling water for a radiator (not shown).

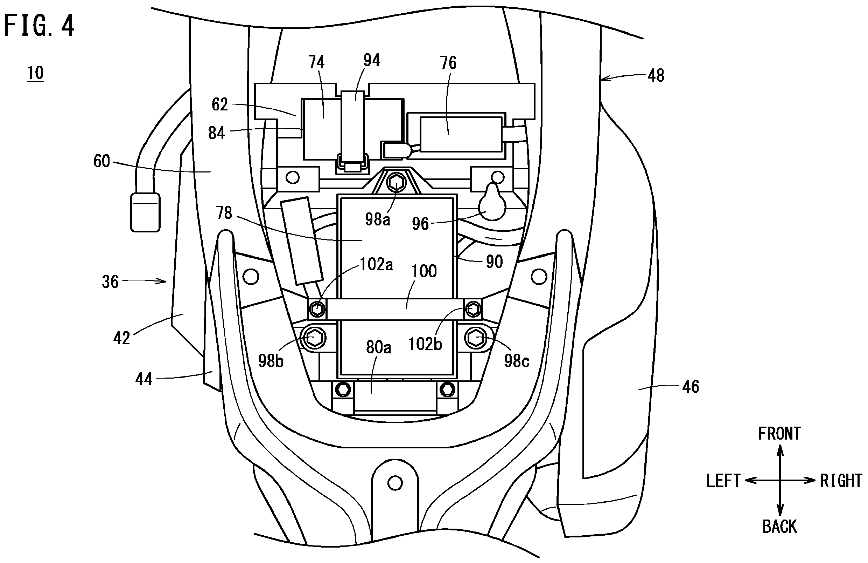

FIG. 4 is a top view of a rear portion of the saddle-type vehicle 10. FIG. 4 illustrates the saddle-type vehicle 10 as seen from above with the seat 70, the lid 86, and the housing casing 92 removed.

The battery casing 90 is fastened to the rear under cover 62 by bolts 98a to 98c at one location in a front portion and two locations in a rear portion. The motive power battery 78 is fixed to the battery casing 90 by a metallic band 100. The metallic band 100 is fastened to the battery casing 90 by a bolt 102a and a bolt 102b at two locations in right and left portions with the motive power battery 78 in between.

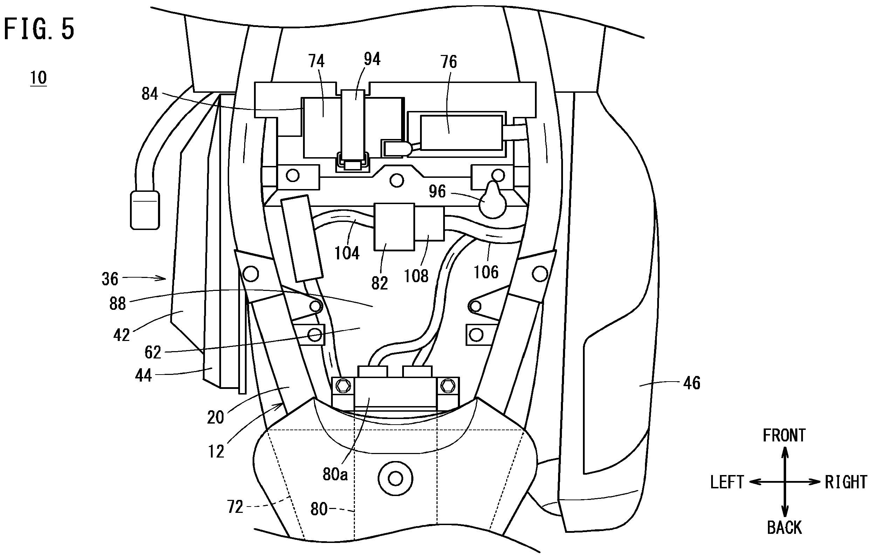

FIG. 5 is a top view of a rear portion of the saddle-type vehicle 10. FIG. 5 illustrates the saddle-type vehicle 10 as seen from above with the seat 70, the side cover 60, the lid 86, the housing casing 92, and the battery casing 90 removed.

The connector 82 of the rear-light wire 104 extending from the rear light 72 is connected with a connector 108 provided at a tip of a wire 106 extending from the fuse 76. The rear light 72 is placed so as to overlap the ECU 80 in top view.

### [Actions and effects]

A saddle-type vehicle 10 equipped with a motor generator as a driving source as shown in the embodiment above, being known as HEV, has a relatively large motive power battery 78 for driving the motor generator. For a saddle-type vehicle 10 of this type, it is desired to have a structure for efficiently housing the large motive power battery 78 in the body cover 48.

To that end, in the saddle-type vehicle 10 according to the above embodiment, the motive power battery 78 shaped in a substantially rectangular parallelepiped is disposed in the body cover 48 placed above the rear wheel 34, and the ECU 80 is positioned lower than the bottom surface 78a of the motive power battery 78. This means the ECU 80 is placed by making use of the space between the motive power battery 78 and the body cover 48, thus achieving the downsizing of the saddle-type vehicle 10. The motive power battery 78 can be efficiently placed in the body cover 48.

Furthermore, in the saddle-type vehicle 10 according to the above embodiment, the back end of the motive power battery 78 is positioned forward of the back end of the ECU 80. This enables the motive power battery 78, having a larger weight than the ECU 80, to be placed at a position close to the center of gravity of the saddle-type vehicle 10.

In addition, in the saddle-type vehicle 10 according to the above embodiment, the motive power battery 78 is placed in a forward tilted position at a location which is offset frontward relative to the peak P1of the rear under cover 62, while the ECU 80 is placed in a backward tilted position at a location which is offset backward relative to the peak P1. This results in the motive power battery 78 and the ECU 80 being placed obliquely along the rear under cover 62 having the bent portion 88 with an upwardly projecting bend, so that the center of gravity of the saddle-type vehicle 10 can be placed at a lower position.

Further, in the saddle-type vehicle 10 according to the above embodiment, the rear light 72 is placed above the ECU 80 and at a position overlapping the ECU 80 in top view and. As the rear light 72 is thus placed above the ECU 80, which has a relatively small volume, downsizing of the saddle-type vehicle 10 can be achieved.

Further, in the saddle-type vehicle 10 according to the above embodiment, the connector 82 of the rear-light wire 104 is placed between the motive power battery 78 and the rear under cover 62, at a position forward of the proximate point P2 of the rear under cover 62, which is closest to the motive power battery 78. This allows the connector 82 to be placed by making use of a dead space between the rear under cover 62 and the motive power battery 78.
A rear under cover (62) placed above a rear wheel (34) is formed with an upwardly projecting bend. A motive power battery (78) shaped in a substantially rectangular parallelepiped is disposed in the rear under cover (62). An ECU (80) is positioned lower than a bottom surface (78a) of the motive power battery (78).

## Claims

1. A saddle-type vehicle (10) comprising:
a rear wheel (34);
a body cover (48) placed above the rear wheel (34);
a bottom surface of the body cover (48) is formed with an upwardly projecting bend,
a motive power battery (78) shaped in a substantially rectangular parallelepiped is disposed in the body cover (48); wherein
an ECU (80) is placed in the body cover (48), wherein
the motive power battery (78) and the ECU (80) are placed above the rear wheel (34); and
the ECU (80) is positioned lower than a bottom surface (78a) of the motive power battery (78).

2. The saddle-type vehicle (10) according to claim 1, wherein a back end of the motive power battery (78) is positioned forward of a back end of the ECU (80).

3. The saddle-type vehicle (10) according to claim 2, wherein
the motive power battery (78) is placed in a forward tilted position being offset frontward relative to a peak (P1) of the bottom surface of the body cover (48), and
the ECU (80) is placed in a backward tilted position being offset backward relative to the peak (P1) of the bottom surface of the body cover (48).

4. The saddle-type vehicle (10) according to claim 2 or 3, wherein a rear light (72) overlaps the ECU (80) in top view and is placed above the ECU (80).

5. The saddle-type vehicle (10) according to claim 3 or 4, wherein a connector (82) of a rear-light wire (104) is placed between the motive power battery (78) and the bottom surface of the body cover (48), at a position forward of a proximate point (P2) between the motive power battery (78) and the bottom surface of the body cover (48).

## Patentansprüche

1. Sattelfahrzeug (10), welches aufweist:
ein Hinterrad (34);
eine Rumpfabdeckung (48), die über dem Hinterrad (34) platziert ist;
wobei eine Unterseite der Rumpfabdeckung (48) mit einer nach oben vorstehenden Biegung ausgebildet ist,
eine Antriebskraftbatterie (78), die angenähert rechteckig quaderförmig ausgebildet ist, in der Rumpfabdeckung (48) angeordnet ist;
wobei eine ECU (80) in der Rumpfabdeckung (48) platziert ist, wobei die Antriebskraftbatterie (78) und die ECU (80) über dem Hinterrad (34) platziert sind; und
die ECU (80) niedriger positioniert ist als eine Unterseite (78a) der Antriebskraftbatterie (78).

2. Das Sattelfahrzeug (10) nach Anspruch 1, wobei ein hinteres Ende der Antriebskraftbatterie (78) vor einem hinteren Ende der ECU (80) positioniert ist.

3. Das Sattelfahrzeug (10) nach Anspruch 2, wobei
die Antriebskraftbatterie (78) mit einer nach vorne geneigten Position relativ zu einem Scheitel (P1) der Unterseite der Rumpfabdeckung (48) nach vorne versetzt platziert ist, und
die ECU (80) in einer nach hinten geneigten Position relativ zu dem Scheitel (P1) der Unterseite der Rumpfabdeckung (48) nach hinten versetzt platziert ist.

4. Das Sattelfahrzeug (10) nach Anspruch 2 oder 3, wobei in Draufsicht eine Heckleuchte (72) die ECU (80) überlappt und über der ECU (80) platziert ist.

5. Das Sattelfahrzeug (10) nach Anspruch 3 oder 4, wobei ein Stecker (82) eines Rückleuchtenkabels (104) zwischen der Antriebskraftbatterie (78) und der Unterseite der Rumpfabdeckung (48) an einer Position vor einem nächsten Punkt (P2) zwischen der Antriebskraftbatterie (78) und der Unterseite der Rumpfabdeckung (48) platziert ist.

## Revendications

1. Véhicule de type selle (10) comprenant :
une roue arrière (34) ;
un revêtement de corps (48) placé au-dessus de la roue arrière (34) ;
une surface inférieure du revêtement de corps (48) est formée avec une courbure faisant saillie vers le haut,
une batterie d'énergie motrice (78) ayant la forme d'un parallélépipède sensiblement rectangulaire est disposée dans le revêtement de corps (48) ; dans laquelle
une ECU (80) est placée dans le revêtement de corps (48), dans lequel la batterie d'énergie motrice (78) et l'ECU (80) sont placées au-dessus de la roue arrière (34) ; et
l'ECU (80) est positionné plus bas qu'une surface inférieure (78a) de la batterie d'énergie motrice (78).

2. Véhicule de type selle (10) selon la revendication 1, dans lequel une extrémité arrière de la batterie d'énergie motrice (78) est placée en avant d'une extrémité arrière de l'ECU (80).

3. Véhicule de type selle (10) selon la revendication 2, dans lequel la batterie d'énergie motrice (78) est placée dans une position inclinée vers l'avant en étant décalée vers l'avant par rapport à un pic (P1) de la surface inférieure du revêtement de corps (48), et
l'ECU (80) est placée dans une position inclinée vers l'arrière en étant décalée vers l'arrière par rapport au pic (P1) de la surface inférieure du revêtement de corps (48).

4. Véhicule de type selle (10) selon la revendication 2 ou 3, dans lequel un feu arrière (72) chevauche l'ECU (80) en vue de dessus et est placé au-dessus de l'ECU (80).

5. Véhicule de type selle (10) selon la revendication 3 ou 4, dans lequel un connecteur (82) d'un fil de feu arrière (104) est placé entre la batterie d'énergie motrice (78) et la surface inférieure du revêtement de corps (48) à une position en avant d'un point proximal (P2) entre la batterie d'énergie motrice (78) et la surface inférieure du revêtement de corps (48).
